# EUROPEAN PATENT APPLICATION

(11) **EP 1 832 998 A1**
(43) Date of publication of application: **12.09.2007**
(21) Application number: 06004651.3
(22) Date of filing: 07.03.2006
(51) Int. Cl.: G06F 21/20

(54) **Method of interfacing between electronic devices, method of operating a portable storage device, electronic device and electronic system**

(71) Applicant: HITACHI, LTD., Chiyoda-ku Tokyo 100-8280 (JP)
(72) Inventor: Hohmann, Peter, 20024 Grabagnate Milanese (IT); Slocombe, Dave, London NW6 3AL (GB); Sopieva, Natasha, London NW6 3AL (GB); Ashley, Adrian, 8849 Hungary (HU)
(74) Representative: Beetz & Partner

(57) **Abstract**

A method of interfacing between a first and a second electronic device which are connectable to each other through a first interface (7a, b) comprises the step of providing a wireless interface (11, 12) between said electronic devices (1, 2), the second electronic device (2) being operable in accordance with first transfer information obtained from the first electronic device (1) through the wireless interface prior to establishing a connection through the first interface.

## Description

The invention relates to a method of interfacing between electronic devices, a method of operating a portable storage device as well as to electronic devices and an electronic system. Particularly, it relates to portable storage devices and their interfacing towards other electronic components, particularly computers such as laptops or PCs.

Portable storage devices are used in an increasing manner. They are used for carrying data for example while travelling or for safely backing data storage. A plurality of portable storage devices may be available to a user, and, at the same time, the user may therefore be uncertain which of them is the one he needs. Portable storage devices may for example be electronic storage devices such as memory sticks or hard disk drives (HDG) in credit card format. But also floppy disks, CDs or DVDs may be such memory devices. If a plurality of them is available and the user is uncertain which of them he needs, he has to connect them one after the other to the computer through the respective interface to find out whether the momentarily connected device is the correct one. This is time consuming, particularly for those storage devices that require mechanical actions, i.e. hard disk drives or CDs.

Through their usual interface, these memory devices are connected to the computer. The interface here may be for example a USB interface, an SCSi interface or the like. For CDs or DVDs, after the mechanical activation the interface in this context is the respective reader/writer. After connection through the respective interface was established, usually for example directory is available at the computer storage to which the portable memory device was connected. From this directory and possibly also from other information recognizable through the connection through the usual interface the user may decide whether the momentarily connected storage device is the desired one. This is time consuming because the connection through the respective interface must manually be established, then possibly mechanical arrangements be made (for example turning the HDD) and data transfer must be effected for allowing a user to make his decision. If the momentarily connected device is the wrong one, it must be disconnected, another one will be connected, and the same procedure starts all over.

It is the object of the invention to provide an interfacing method and an operating method as well as an electronic device and an electronic system allowing a quick identification of an electronic device to be connected to another electronic device. It is another object of the invention to provide an interfacing method, device operating method, an electronic device and an electronic system preventing unnecessary mechanical start-ups of portable computer periphery.

The above objects are accomplished in accordance with the features of the independent claims. Dependent claims are directed on preferred embodiments of the invention.

In the method of interfacing between a first and a second electronic device, which are connectable to each other through a first interface, a further wireless interface is provided between said electronic devices. The second electronic device is operable in accordance with first transfer information obtained from the first electronic device through the wireless interface prior to establishing a connection between the two electronic devices through the first interface. The wireless interface may be an RFID interface and may comprise a transponder with the capability of transmitting at least a preferably unique identification (ID) to a corresponding reader through a modulated magnetic or electromagnetic field.

In a method of operating a portable storage device, prior to establishing a physical connection between the storage device and a second electronic device such as a computer, an identifier of said portable storage device is transmitted from the portable storage device to the second electronic device through a wireless channel, preferably an RFID channel. The wireless channel may be a second interface existing in addition to the usual primary interface.

An electronic device such as a portable memory device or a media container device comprises a first interface to a second electronic device such as a computer. It further comprises a wireless interface towards said second electronic device and means for transmitting first transfer information through the second electronic device over the wireless interface prior to establishing a connection through the first interface. The wireless interface may comprise an RFID tag.

On the other side, an electronic device comprises a first usual interface to a first electronic device and a wireless interface towards said first electronic device, means for receiving first transfer information from the first electronic device over the wireless interface prior to establishing a connection through the first interface, and means for acting in accordance with the first transfer information, particularly for displaying information about the first electronic device. The wireless interface may comprise an RFID reader. The wireless interface receives transfer information from the first electronic device and may cause display of appropriate information in order to allow a decision on the first electronic device.

In the following, concepts and embodiments of the invention will be explained also with reference to the accompanying drawings, in which
Fig. 1 is a block diagram of the overall system with the various components,
Fig. 2 is a block diagram of an embodiment of a transponder,
Fig. 3 is a flow of an interfacing method,
Fig. 4 is an example of a table in the second electronic device, and
Fig. 5 is an example of a table in the first electronic device.

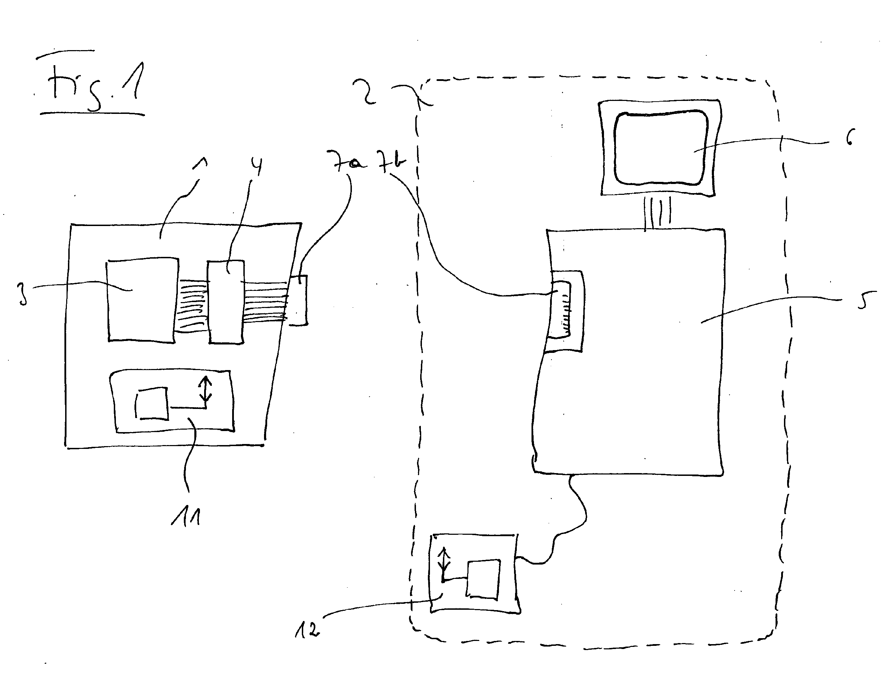

Fig. 1 shows an electronic system comprising a first electronic device 1 and a second electronic device 2. Both said two devices 1 and 2 may themselves be connections of various components. For example, the second electronic device 2 may be a computer with periphery connected to it through respective interfaces. In the following, it is assumed that the first electronic device 1 is an electronic memory device such as a memory stick or a HDD, and the second electronic device 2 is a computer 5 with attached periphery 6. But the invention is not limited to these particular types of electronic devices.

The first electronic device 1 comprises in the case of a storage device the actual storage portion (the hard disk or a RAM 3) and a control 4 as well as a usual interface portion 7a, for example a USB interface. The second electronic device 2 may comprise in the case that it is a computer the PC 5, a display 6 and a matching interface 7b for interfaces of periphery to be attached to the computer 5. The interface 7b may therefore itself be a USB interface. With these installations, the two electronic devices 1 and 2can communicate in well known manner.

In addition to that, both electronic devices 1 and 2 have a wireless interface, formed by components 11 and 12, respectively. Wireless interface 11 is part of the first electronic device 1, wireless interface 12 is part of the second electronic device 2. The wireless interfaces may for example be based on RFID technology. They may comprise a transponder 11 and a corresponding reader 12. The transponder may be active (i.e. having a power supply) or passive (i.e. not having the said power supply). The wireless interface attached to the first electronic device 1 may be separately attached to the outside of the device, e.g. through adhesive. It may have a flat, sheet-like or strip-like outer shape. It may for example be an RFID tag. Or it may be built-in. It may have a signalling connection to the other components (reference no.s 3 and 4) of the first electronic device 1.

The second electronic device 2 may comprise the reader 12. Such a reader may send out a variable magnetic field for providing power supply to a passive transponder, and it may likewise comprise a receiver for receiving a modulated magnetic or electromagnetic field from the transponder 11 and evaluating the received signals. The wireless interface/transponder 12 may itself be connected to the PC 5 through an appropriate interface. The PC 5 may have suitable software allowing predetermined actions upon reception of particular signals from the wireless interface 12. One such action may be display of particular information relating to the first electronic device 1. Another action may be automated measures.

The overall operation is as follows: in dependence of the reach of the wireless interface, information may be transmitted between the two wireless interfaces 11 and 12 of the two electronic devices 1 and 2 prior to a connection being established through the regular interfaces 7a and 7b. The wireless interface 11 in the first electronic device transmits first transfer information towards the wireless interface 12 of the second electronic device. This first transfer information may comprise an identifier. The identifier may be unique for a respective wireless interface 11, for example unique for an RFID tag. The first transfer information may also be or comprise information about the first electronic device 1 itself, for example information about the type of device, the name of the device, or the stored content. If it is a memory device, it may, for example, comprise some kind of directory and/or file name information.

The first transfer information is transmitted from the wireless interface 11 towards the wireless interface 12, and received and processed there.

If an ID is received in the wireless interface 12 from the wireless interface 11, the second electronic device 2 may for example check whether said ID is already known in the second electronic device and may for example display known information relating to said ID, i.e. information about the first electronic device. Display may be on a screen 6. Display will give information about the first electronic device 1 although no connection was established so far through interfaces 7a and 7b.

Accordingly, this method of interfacing between two electronic devices provides much faster information than having to wait for the mechanical connection being established, the mechanical provisions being made (HDD starting to spin), log-in into computer being made, data transfer being accomplished and finally display being made. The wireless interface may have a reach of less than 5 m or less than 2 m. Then, when the first electronic device is in the hands of the user of the second electronic device, it is also within the reach of the wireless interface 12, so that immediately information about the first electronic device 1 can be displayed on the second electronic device 2. Needless to say here that instead of displaying information also other automated actions may be made or started in dependence of the first transfer information.

The information displayed in the second electronic device 2 upon receipt of the first transfer information may have been stored in the second electronic device 2 at the occasion of an earlier connection of the first electronic device 1 to the second electronic device 2 through the first interface 7a and 7b at the occasion of this connection. Particular information about the first electronic device 1 can be transferred to the second electronic device 2 and can be stored there in association with an identifier to be transferred through the wireless interface 11, 12. Thereafter, if the wireless interface 11 of the first electronic device 1 comes again into the reach of the wireless interface 12 of the second electronic device 2, the identifier will again be transmitted as first transfer information, and information stored in association with said identifier can then be processed, used or displayed.

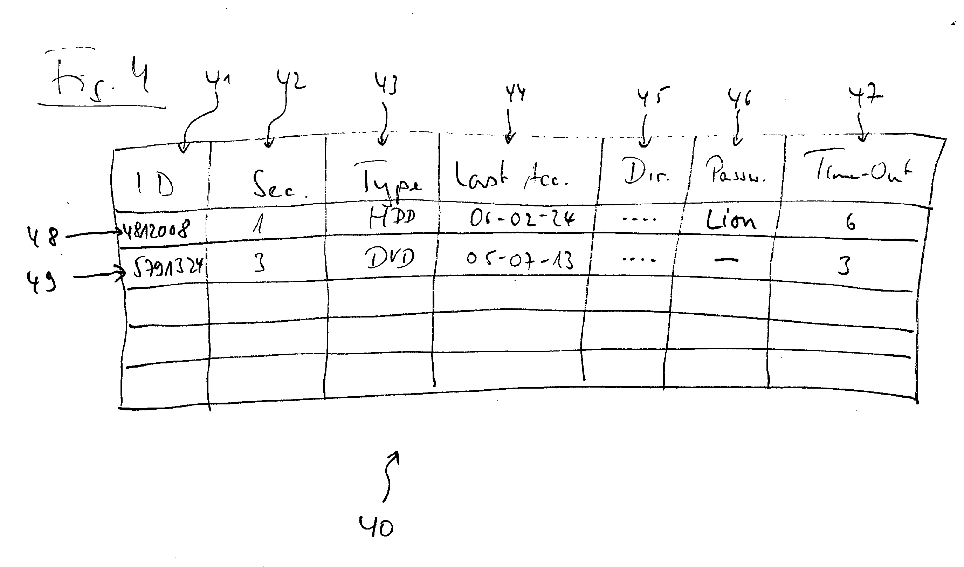

With this technique, it is possible to reduce the data amount to be transferred through the wireless interface to a minimum. It may be only an ID sufficient to find the information about the first electronic device 1 stored in association with the ID in the second electronic device 2. In this way, the second electronic device 2 may build up a table (Fig. 4) with IDs of various first electronic devices 1, the IDs respectively being associated with information about the respective device. Upon receipt of an ID from a first electronic device 1 in the second electronic device 2 through the wireless 11, 12, the second electronic device 2 can access a related table of IDs of first electronic devices 1 that were previously connected. If a match is found, the stored information can be further used and for example outputted. If no match is found, the first electronic device 1 is unknown to the second electronic device 2, and corresponding actions and displays can be initiated.

Content stored in association with an identifier (ID) of a first electronic device 1 to be transmitted through the wireless interface to the second electronic device 2 may, in said second electronic device 2, comprise content information (such as file information, directory information), built information (brand, type, manufacturing number, size, technical data, ...), administrative information (first connection, last connection, history information, ...), user input and the like.

These above features, activities and possibilities may be controlled and/or implemented by an appropriate software resident in the second electronic device 2 and, for example, started or otherwise activated upon receipt of a related interrupter from the wireless interface 12 of the second electronic device 2. For example, if a first electronic device 1 with a respective wireless interface 11 comes into the reach of the wireless interface 12 of the second electronic device 2, a display window may pop up on screen 6 displaying information about said first electronic device 1. Accordingly, without any further measures and practically immediately a user gains knowledge about the first electronic device 1 without establishing a connection through the first interface 7a, 7b.

The wireless interface 11 of the first electronic device 1 may be an externally attached interface without logic/electric/electronic connection to the other electronic components of the first electronic device 1. It may be a usual RFID-tag as for example also used for products. Such wireless interfaces (RFID-tags) have a unique ID capable of distinguishing them against all other available RFID-tags. They are able to transmit said unique ID to a corresponding interface, i.e. interface 12 of the second electronic device 2, which is called a "reader" in the case of RFID-tags.

But likewise, the wireless interface 11 of the first electronic device 1 may have a connection to the electrical components of the first electronic device 1 and may particularly have the capability of transmitting data obtained from the primary components of the first electronic device 1. For example, in the case of a memory device as first electronic device 1, the wireless interface 11 may be capable of transmitting one or more of file information, content information, built information or administrative information as mentioned earlier.

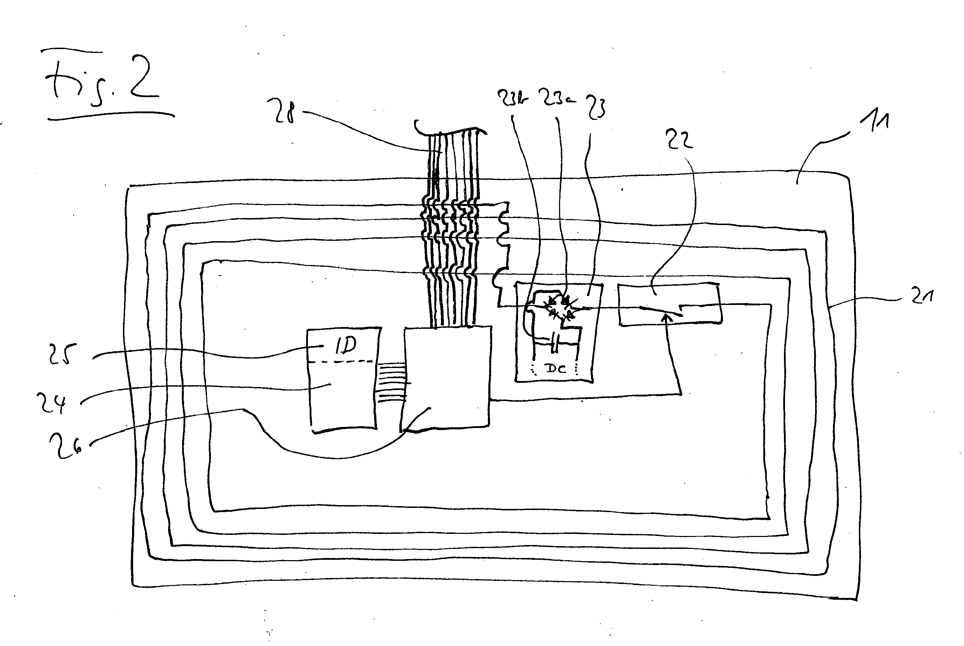

Fig. 2 shows schematically an embodiment of an RFID-tag 11. 21 is induction coil utilized for power supply of the interface components. 23 is a power converter for example for rectifying used currents and generating a suitable DC as long as the induction coil receives an appropriate field. Said power supply may comprise rectifying means 23a, smoothing means 23b, a small power storage, power conversion means and the like. 22 is a modulator capable of modulating the current flowing in the induction coil 21 for allowing the wireless interface (RFID-tag) also to send information. 24 is a memory that holds for example an identifier 25 which may be unique for said one wireless interface/tag 11. 26 is a control unit that controls the operation of the various components.

Said components are without power supply in a passive transponder. But when the first electronic device - and with it the wireless interface 11 - comes into the reach of a correspondingly built wireless interface 12 of a second electronic device, the induction coil 21 will receive a changing magnetic field, will generate an AC which will be rectified in power supply 23. With this, the other components can be powered up, and the interface can commence its regular operation. A kind of first handshaking between wireless interface 11 and wireless interface 12 through mutual data exchange (sending and/or receiving information in both wireless interfaces to and from each other) may be the first action amongst them. Then, ID 25 can be transmitted as first transfer information, this being controlled by controller 26 and modulator 22. Through this, the ID 25 is sent out from the wireless interface 11 towards the wireless interface 12 and start there the actions as describe earlier.

28 is a connection towards the other components of the first electronic device 1, for example to controller 4 and/or memory 3 in Fig. 1. 27 symbolizes again an appropriate interface for accomplishing the connection towards the primary components of the first electronic device 1. With such a construction, at the time of connection through the first interface 7a, 7b (and corresponding power supply to the first electronic device 1), particular information can be copied from the primary components of the first electronic device 1 (such as memory 3, controller 4) into the memory 24 of the wireless interface 11 so that it is available when a wireless connection to a corresponding wireless interface 12 of a second electronic device 2 is possible.

With such a construction, the wireless interface 11 is able to not only transmit an ID 25, but also - or instead - information about the first electronic device 1 itself, to be received at the wireless interface 12 of the second electronic device 2 and used there. On the side of the second electronic device 2, said transmitted first transfer information from the first electronic device 1 may be evaluated and/or stored. The evaluation on the side of the second electronic device may take into account both newly transferred information and information stored previously at the occasion of earlier connections through either of first interface 7a, 7b or wireless interface 11, 12. Display of information at the second electronic device 2 may be in accordance with said evaluation.

The display at the second electronic device 2 may comprise content information relating to the first electronic device. It may be the directory structure and file names in the directories or the like. The displayed information may also comprise type information or built information relating to the first electronic device (brand), commercial name, technical data, specifications and other particulars. The displayed information may also comprise ID information, for example display of an ID transmitted through the wireless interface 11, 12, a name given to the device by a user, or the like. The display may also comprise time and connection information relating to the last earlier connection of the first electronic device 1 to the second electronic device 2 through the first interface 7a, 7b, the wireless interface 11, 12, or both, history information in this respect, and the like.

The wireless interfaces 11 and 12 may also operate to transmit second transfer information from the wireless interface 12 of the second electronic device 2 to the wireless interface 11 of the first electronic device 1. This second transfer information may be fully or in parts transmitted prior to transmittal of the first transfer information or at least prior to transfer of sensitive parts thereof. The second transfer information may comprise ID information relating to the second electronic device 2. The second transfer information may also comprise information stored in the second electronic device in association with the ID of the first electronic device 1.

On the side of the first electronic device 1 and particularly in the wireless interface 11 there, the second transfer information may be evaluated, and particular measures may be made in accordance with said evaluation. This may happen prior to establishing a connection through the first interface 7a, 7b.

The evaluation of the second transfer information in the wireless interface 11 may comprise an ID check of the second electronic device 2, said ID being transmitted from the second electronic device 2 to the first electronic device 1 with the second transfer information through the wireless interfaces 11, 12. The first electronic device 1 and particularly the wireless interface 11 there may be configured such that transferable information there is transferred through the wireless interface 11 only if evaluation of the second transfer information satisfies predetermined criteria, particularly safety criteria. With this feature, it can be prevented that possibly sensitive information is transmitted through the wireless interfaces 11, 12 from the first electronic device 1 to the second electronic device 2. The arrangements can me made such that transmittal is effected only if the second transfer information satisfies predetermined criteria, these criteria having been set or established by the user at the occasion of an earlier connection through the first interface 7a, 7b.

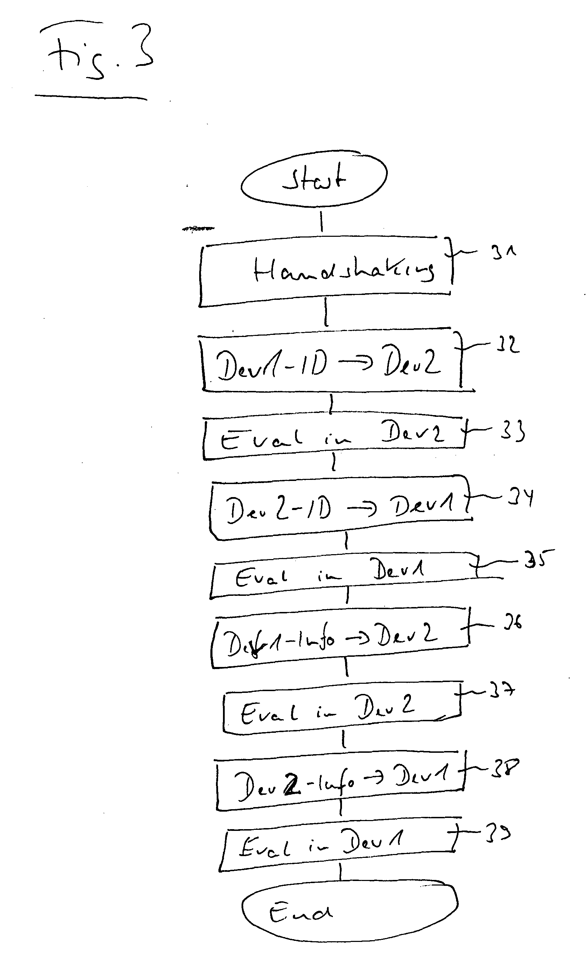

Fig. 3 shows an embodiment of a possible overall interaction amongst the wireless interfaces 11 and 12 of the two electronic devices 1 and 2. Upon getting contact, first a technically necessary handshaking routine 31 may be effected for setting up the wireless interface connection through the wireless interfaces 11 und 12. Upon completion, the identifier of the first electronic device 1 (Dev 1-ID) may be transferred through the wireless interface 11, 12 to the second electronic device 2, as shown in step 32. In step 33, evaluations may be effected in the second electronic device 2. In step 34, the identifier of the second electronic device (Dev 2-ID) may be transferred to the first electronic device 1. In step 35, evaluations in the first electronic device 1 and particularly in the wireless interface there may take place. In step 36, further information (Dev 1-info) may be transferred through the wireless interface 11, 12 from the first electronic device 1 to the second electronic device 2. In step 37, further evaluations may be effected in the second electronic device 2. In step 38, information from the second electronic device (Dev 2-info) may be transferred through the wireless interface to the first electronic device 1. In step 39, additional processing's, checks and storages may be effected in the first electronic device 1.

All the measures described with reference to Fig. 3 for the first electronic device may particularly be effected prior to a connection through the first interface 7a, 7b being established. This may also imply that no dedicated power supply is given. Said measures in the first electronic device 1 may particularly be effected in the wireless interface and may be powered by the power supply 23 in said wireless interface 11.

At an appropriate occasion in the flow of Fig. 3, display of information relating to the first electronic device 1 may be effected in the second electronic device 2. In Fig. 3, this may be effected after step 33 or after step 37.

The information transferred in steps 32 and 36 may together form the first transfer information. The information transferred in steps 34 and 38 may all together form the second transfer information.

Although depicted symmetrically, the wireless interface 11 of the first electronic device 1 and the wireless interface 12 of the second electronic device 2 are usually not symmetrical. The one of them may be more complex than the other. But both of them may be suitable for sending and receiving data. One of them may in addition be suitable for generating a field used for power supply for the other of them.

The described features both in the first and second electronic devices 1 and 2 may be implemented in parts by respectively resident software. In the first electronic device 1 and particularly in the interface there, it may be stored in a PROM as a part of memory 24. In the second electronic device 2, it may be usual software loaded upon certain criteria, e.g. under auto-start or upon an interrupt from the wireless interface 12 or upon user command. Said software may accomplish one or more of the following functions:
- Effecting the steps in the second electronic device 2 described with reference to Fig. 3,
- Maintaining and updating a table as described with reference to Fig. 4 at an appropriate storage location in the second electronic device 2,
- Determining and implementing the desired or required security level,
- Determining capabilities of the wireless interface 11 of the first electronic device 1.

Fig. 4 shows an example of a table as it may be kept in the second electronic device 2 for managing the various first electronic devices 1 that may be connected through various first interfaces 7a, 7b and, likewise, through the wireless interface 11, 12. Said table may have the nature of a log file.

The table has various columns. 41 is the column of the various IDs received through the wireless interface 11,12 over time. 42 is a column holding respective security levels desired for the respective devices. 43 holds the type of the first electronic device 1. 44 holds the date of the last access. It may be the accrss through the wireless interface 11, 12, and/ or through the first interface 7as, b. 45 holds content information relating to the first electronic device 1, for example a directory information, file information or the like. This may be a lengthy entry or may be a pointer to a separate file. 46 may hold a password. 47 may hold a timeout value defining how long for example after the last access the first electronic device 1 should be treated as known. As last access date in column 44, the access through the first interface 7a, 7b and/or the access date through the wireless interface 11, 12 may be registered. The table may have a (not shown) information column holding a user-defined information for the respective first electronic device 1 such as priority, device nick-name, administrative information or the like. From the display of this information, the user may learn quickly through his own entry what kind of device he has at his hands. The entry there may be or comprise user-set priority information of the respective first electronic device 1 giving the user information about the importance of the respective device. The table may further have a (not shown) display column holding a selected one of a plurality of possible display settings defining respectively display features or formats (such as background color, character color, and the like) so that from the display format alone a user may infer certain information about the first electronic device 1.

48 is a first entry into the table. As ID, the value 4812008 is assumed. A security level 1 is assumed which may be a high security level. In accordance with the security entry in said column, the related software may implement various and from device to device differing security levels. 43 defines the type of the device, a hard disk drive in the example of entry 48. Last access date in entry 48 is February 24, 2006, as an example. A lengthy directory entry may follow in column 45. As a password, the user selected the word "Lion" that will be both held in the table 40 as shown in Fig. 4 and will also be transmitted to the first electronic device 1 and particularly to the wireless interface 11 there, so that a related check can be effected. It is further assumed that the user selected in the example six months as an appropriate time (due to media) as a timeout value after the last access. Thereafter, the first electronic device 1 as described in entry 48 shall no longer be treated as known by the system. 49 is another entry of another first electronic device 1. As ID, 5791324 is assumed. Security level is 3. The type of the device is DVD. Last access through the second electronic device 2 is assumed for July 13, 2005. Again, a lengthy directory entry may follow. Nothing was selected as password. A timeout value of e.g. 3 month was selected.

Generally speaking, parts or all of the information in one row of table 40 may be displayed when the respective first electronic device 1 comes into the reach of the second electronic device 2 such that the wireless interface can operate as described. Specifically, if the first electronic device having a wireless interface 11 with the ID 4812008 comes into the reach of the wireless interface 12 of the second electronic device 2, after a possible handshaking the ID 4812008 will be transmitted from the first to the second electronic device. With this ID, the second electronic device 2 can access table 40 and will find the related entry 48 there. It will learn the security level and the type of the device, can check for timeout and can then apply the desired security settings and possible display settings. Sooner or later a display may follow in the second electronic device 2 giving information about the first electronic device 1. The information may for example be that gained from columns 44 und 45.

Similar entries to those for example in row 48 may be kept in memory 24 of the first electronic device 1 having the ID 4812008. The ID itself will be stored there and information such as those in columns 42 to 47 may also be stored. These data may be entered either taken from the second transfer information transferred from the second electronic device 2 to the first electronic device 1 through the wireless interface 11, 12, or may be taken directly from the primary components of the first electronic device 1 through connection 27, 28. The last access date stored in the first electronic device may be different from that stored in table 40 in the second electronic device because meanwhile the first electronic device 1 may have been connected to another second electronic device 2. In comparing the related entries, the second electronic device may find out whether meanwhile (i.e. after the last access of the first electronic device 1) said first electronic device 1 has been connected to another second electronic device 2, may not be aware of that its information is not up to date and may issue a related hint.

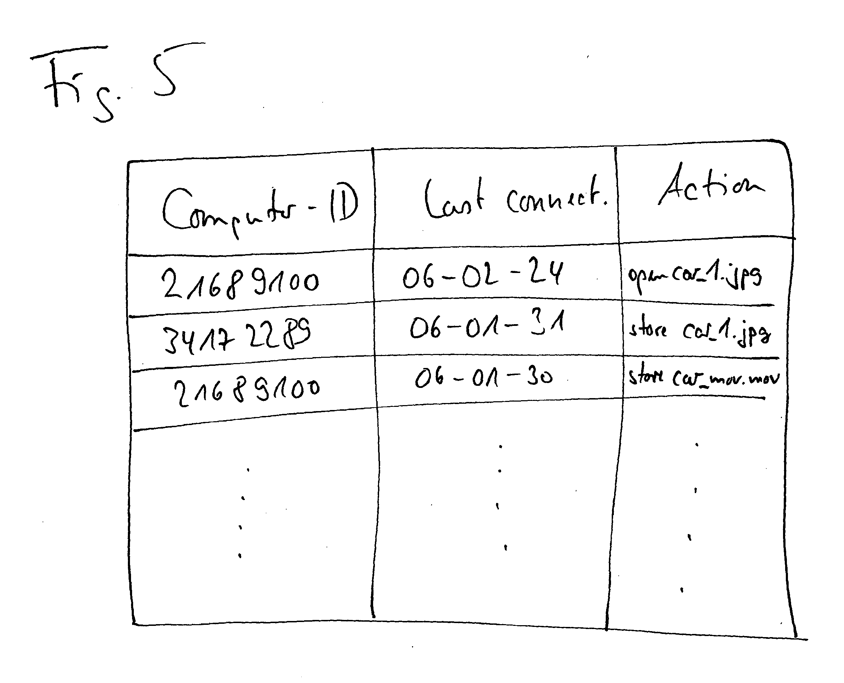

Another optional feature is that the first electronic device 1 maintains a history or file or table 50 as shown in Fig. 5, similar to that shown in Fig. 4 and giving information about past connections of said one first electronic device 1 to various second electronic devices 2. Said table may have the nature of a log file. Its content may in parts or fully be part of the first transfer information, i. e. may be transferred through the wireless interface to the second electronic device. Instead or in addition, it may be transferred through the first interface to the second electronic device. There, a user can see how the first electronic device 1 was connected earlier. Maintenance of said table may be effected in the second electronic device 2. The sequence may thus be: (a) transmittal to the second electronic device 2, (b) use and update there, (c) retransmittal to and storage in the first electronic device 1. Said table may have an ID entry 51 for an ID of the second electronic device 2 to which the first electronic device 1 was connected. It may have a date entry 52 storing the date of connection through the first and/or the wireless interface. It may have an action entry 53 storing information about file and/or activity, such as "car_1.jpg opened; car_2.jpg deleted; car_mov.mov stored".

Another feature in the second electronic device 2 may be that there information about data exchanged with, or modified in, one or more first electronic devices 1 is stored and kept accessible for evaluation and/or search across the plurality of first electronic devices 1 even if they are not connected. Said information may comprise information obtained through the wireless interface 11, 12 and/or through the first interface 7a, b. Through this, a user can trace data traffic also to and from presently disconnected periphery so that he may get support in finding data. The information may be kept and shaped such that it is accessible to other applications and functions thereof. For example, when trying to open a file in a word processor, it may be visible in the corresponding file-opening-window. The information may be used on operating system's level, i. e. in operating system files and executables. If the second electronic device is a computer, it could calculate information flow probabilities under the assumption that a PC is a hub of information creation and transfer and that data carriers as first electronic devices 1 (CD's, memory sticks, DVDs) move between these hubs. It could also store and recall file passage histories so that from such stored data it could profile and optionally predict where a user would have taken a file to, based on the passage of an earlier file. Further, it could create file passage patterns or 'signatures' (similar to virus signatures) for standard file migration patterns that it has created through a learning algorithm in its database architecture.

Another feature in the second electronic device 2 may be that there the first electronic device is at least in parts simulated or emulated as if connected although it is not connected. This may be accomplished through software. The emulation or simulation may be made with reference to information obtained through the first interface 7a, 7b or through the wireless interface 11, 12, and may be such that the operating system or other softweare in the second electronic device 2 "sees" the emulated or simulated first electronioc device 1 to some extent, although not connected. For example, the emulation may be such that an operating system's search function in the second electronic device 2 also searches the first electronic device 1 based on information about it transmitted earlier to the second electronic device 2 through one of the interfaces 7a, 7b or 11, 12. Here the emulation may involve directory information and/or file name information and/or device information relating to the first electronic device 1 stored in the second electronic device 2. The emulation/ simulation may take place when the first electronic device 1 is completely disconnected or when it is only connected through the wireless interface 11, 12 to the second electronic device 2. It stops after connection through the first interface 7a, b.

Wireless interfaces as described in the foregoing specification, and particularly RFID-tags, may have different levels of intelligence. Simple RFID-tags solely transmit their ID that is firmly written into them. Beyond that, they may have no further capabilities (of course, besides those required for proper technical operation, such as handshaking and the like). Security features as described above to be implemented in the first electronic device 1 may then be implemented on the side of the second electronic device 2. Other, and more complex, RFID-tags are more sophisticated, they have a memory 24 and some kind of processing capabilities 26. They allow more complex routines and security settings.

The individual features of the invention shall also be considered combinable with each other as far as they are not in contradiction to each other, even if this is not expressly said in this specification.

## Claims

1. Method of interfacing between a first and a second electronic device which are connectable to each other through a first interface,
**characterized by**
providing a wireless interface between said electronic devices, the second electronic device being operable in accordance with first transfer information obtained from the first electronic device through the wireless interface prior to establishing a connection through the first interface.

2. The method of claim 1, with one or more of the following features:
- the first electronic is portable;
- the first electronic device comprises a data storage, particularly a hard disk drive
- the second electronic device comprises a data processing device, particularly a computer,
- the first interface comprises a physical connection between the first and the second electronic device, particularly a bus, particularly a USB bus,
- the wireless interface comprises an RFID interface,
- the first transfer information comprises unique identification information.

3. The method of claim lor 2, wherein the second electronic device displays information about the first electronic device in accordance with said first transfer information.

4. The method of claim 3, in which the displayed information comprises one or more of the following:
- content information about content possibly stored in the first electronic device
- type information about the type of the first electronic device
- ID information ...
- time information
- connection information

5. The method of claim 3 or 4, wherein the displayed information comprises information stored in the second electronic device and accessed there for display in accordance with the first transfer information.

6. The method of claim 5, wherein the displayed information was transmitted from the first to the second electronic device and stored there at an earlier point of time.

7. The method of claim 3 or 4, wherein the displayed information comprises information stored in the wireless interface and transmitted to the second electronic device through the wireless interface for display thereof.

8. The method of one of the preceding claims, wherein the first electronic device is operable in accordance with second transfer information obtained from the second electronic device through the wireless interface prior to establishing a connection through the first interface.

9. The method of claim 8, wherein the second transfer information is at least in parts transmitted prior to at least parts of the first transfer information, wherein said part of the first transfer information is transmitted only if said part of the second transfer information satisfies predetermined criteria.

10. The method of one of the preceding claims, wherein the second electronic device maintains a table holding at least identifiers of one or more first electronic devices that were connected to the second electronic device through the first interface and/or the wireless interface, and respectively associated information.

11. The method of one of the preceding claims, wherein the first electronic device holds a table holding at least identifiers of one or more second electronic devices to which it was connected through the first interface and/or the wireless interface, and respectively associated information.

12. The method of one of the preceding claims, wherein the second electronic device stores information about data and data traffic amongst it and one or more first electronic devices, with reference to information obtained through the first interface and/or through the wireless interface.

13. The method of one of the preceding claims, wherein the second electronic device emulates the first electronic device, when it is disconnected, with reference to information obtained through the first interface and/or through the wireless interface.

14. A method of operating a portable storage device, wherein prior to establishing a physical connection between said storage device and a second electronic device an identifier of said portable storage device is transmitted from said portable storage device to said second electronic device through a wireless channel.

15. An electronic device (1), comprising a first interface (7a) to a second electronic device (2),
**characterized in** comprising
a wireless interface (11) towards said second electronic device (2), and means (21 - 28) for transmitting first transfer information to the second electronic device (2) over the wireless interface (11) prior to establishing a connection through the first interface (7a).

16. The device of claim 15, comprising means (21 - 28) for transmitting information about the device to the second electronic device.

17. The device of claim 15, comprising means (24) for storing information about the device to be transferred to the second electronic device over the wireless channel.

18. The device of one of the claims 15 to 17, comprising means (26) for checking second transfer information received from the second electronic device (2) over the wireless interface (11), wherein the means for transmitting the first transfer information are operable in accordance with the check result.

19. The device of claim 15, wherein the wireless interface (1) comprises an RFID tag.

20. An electronic device (2), comprising a first interface (7b) to a first electronic device (1),
**characterized in** comprising
a wireless interface (12) towards said first electronic device (1), means (1) for receiving first transfer information from the first electronic device (1) over the wireless interface (12) prior to establishing a connection through the first interface (7b), and means for evaluating the first transfer information.

21. The electronic device of claim 20, comprising means for storing information about the first electronic device, and means for retrieving information about the first electronic device in accordance with the first transfer information.

22. The electronic device of claim 20 or 21, comprising means for transmitting second transfer information to the first electronic device over the wireless interface prior to establishing a connection through the first interface.

23. The device of claim 15, wherein the wireless interface (12) comprises an RFID reader.

24. A system comprising a first electronic device (1) of one of the claims 15 to 19 and a second electronic device (2) of one of the claims 20 to 23.
